# EUROPEAN PATENT SPECIFICATION

(11) **EP 3 939 762 B1**
(45) Date of publication and mention of the grant of the patent: **13.11.2024**
(21) Application number: 20185902.2
(22) Date of filing: 15.07.2020
(51) Int. Cl.: B29C 33/30, B29C 45/26, B29C 33/12, B29C 45/14, B29C 45/38, B29C 45/42

(54) **CENTERING SYSTEM**
ZENTRIERSYSTEM
SYSTÈME DE CENTRAGE

(43) Date of publication of application: 19.01.2022
(73) Proprietor: Gerresheimer Regensburg GmbH, 93047 Regensburg (DE)
(72) Inventor: REGER, Florian, 93047 Regensburg (DE); HUTTER, Josef, 93047 Regensburg (DE); BAUMER, Bernd, 93047 Regensburg (DE)
(74) Representative: Lang, Johannes

(56) References cited:
- EP-A2- 0 893 221
- WO-A1-2012/014987
- WO-A2-2013/189608
- DE-A1- 3 311 136
- DE-U1- 29 724 134
- JP-A- 2016 028 862
- JP-A- H02 295 618
- JP-B2- 5 704 172
- SE-A1- 1 450 090
- US-A- 4 750 876

## Description

### Field of the Invention

The present invention relates to a centering system and a centering sub-system and in particular to a centering system for being used in the field of injection molding.

### Background

Generally, centering systems are used to center a first part relative to a second part. In the field of injection molding, a first part may be a mold half of an injection mold, wherein the first part includes a mold cavity. The second part may be a gripping tool that is configured to automatically grip a molded part from the mold cavity of the injection mold and/or that is configured to automatically place an insert in the mold cavity for over molding said insert.

Known centering systems use several projecting bolts being associated with the first part and corresponding centering recesses, being associated with the second part, or vice versa, see for example document DE 297 24 134 U1.

veisa. These centering bolts/recesses must be positioned with respect to each other very precisely, to allow a proper centering. Particularly, changes in temperature and resulting thermal expansion of the parts must be considered. For centering the first part relative to the second part, the bolts and recesses are brought into engagement due to a relative axial movement of a part relative to the other part along an engaging direction, that corresponds to the axial direction of the bolts.

In the field of injection molding, centering recesses may be provided in a mold half. The positions of corresponding centering bolts, that are e.g. associated with a respective gripping tool, are then defined in dependency on the positions of the centering recesses. As the mold half thermally expands during operation, the exact position of the centering recesses must be measured when the mold half is at operating temperature. Alternatively, thermal expansion of the mold half can be simulated to determine the exact position of the centering recesses. After having determined the position of the centering recesses the centering bolts can be manufactured and/or installed on the gripping tool, respectively.

In conventional centering systems, typically at least two different types of bolts are used. A first bolt is a cylindrical bolt, for defining a relative position of first and second parts to each other. The second bolt is machined on two opposite sides, to provide two opposite substantially parallel surfaces. This second bolt serves for preventing a relative rotation of first and second parts to each other, at least when the bolt(s) is/are in engagement with a respective recess(es).

A variation of temperature, e.g. caused by an injection molding process, may lead to different thermal expansion of the first and second part. Typically, a mold half has a greater thermal expansion (due to higher temperature differences), than an associated gripping tool. Further, combinations of different materials, that may be used in either one of the parts to be centered, may amplify this effect (e.g. due to bimetallic deformation) or may lead to a thermal expansion that is difficult to predict.

Due to different thermal expansion of the parts, such as an injection mold, a mold half and/or a gripping tool, the position and/or orientation of each of the bolts/recesses may vary and a bolt may not (precisely) fit into the associated recess. Thus, bolts and recesses are prone to wearing or may even get seized, particularly, if bolts and recesses are manufactured with small tolerances. Further, the achievable precision of the centering is limited by the occurring thermal expansion of the parts and the associated minimal manufacturing tolerances.

Thus, the object of the present invention is to provide an improved centering system, that overcomes the above-mentioned drawbacks at least partly.

### Summary of the Invention

The object is achieved by a centering sub-system, a centering system, an injection mold, a gripping device, a separating device, an injection mold system and a method for centering two parts relative to each other, as defined in the independent claims.

Particularly, the object is achieved by a centering sub-system that includes a first centering element and a second centering element. The first centering element defines a first guiding axis and is adapted to engage with a first corresponding centering element of a corresponding centering sub-system along an engaging direction. Further, the first centering element is configured to allow a relative movement between the first centering element and the first corresponding centering element along the first guiding axis during engaging.

The second centering element defines a second guiding axis and is adapted to engage with a second corresponding centering element of the corresponding centering sub-system. Engaging of the second centering element may be along the engaging direction of the first centering element. The second centering element is configured to allow a relative movement between the second centering element and the second corresponding centering element along the second guiding axis during engaging. Further, the first guiding axis and the second guiding axis are nonparallel and each of the first guiding axis and the second guiding axis is different from the engaging direction.

Any of the first and second guiding axes may be defined by positive locking between the respective centering element and the corresponding centering element. For example, a centering element (first and/or second) may comprise a protrusion, such as a rib and the corresponding centering element (first and/or second) may comprise a corresponding recess, such as a groove. The guiding axis may then be defined by the longitudinal expansion direction of the rib and/or the groove, respectively.

The relative movement between the centering element (first and/or second) and the corresponding centering element (first and/or second) along the (first and/or second) guiding axis is allowed during engaging, i.e. until engaging of the centering element(s) and the corresponding centering element(s) is complete. After both, i.e. first and second, centering elements are in engagement with the respective corresponding centering element, the relative movement is blocked. Particularly, the first centering element blocks the relative movement of the second centering element along the second guiding axis, and vice versa. Allowing a relative movement along the first and/or second guiding axis leads to a self-centering centering sub-system. Further, changes in position of the centering elements and/or corresponding centering elements, that may occur e.g. due to thermal expansion, can be compensated. Thus, manufacturing and installation of the centering elements and corresponding centering elements is facilitated, and the centering elements and/or corresponding centering elements are less prone to wearing. Additionally, tolerances can be chosen narrower, and thus, a more precise centering can be achieved.

The centering sub-system may be configured so that engaging of the first centering element with the first corresponding centering element may occur prior to, after or at the same time as engaging of the second centering element with the second corresponding centering element. The engagement is achieved by moving the respective centering element (and/or the corresponding centering element) along an associated engaging direction. The engaging direction associated with the first centering element may be identical or different from the engaging direction of the second centering element.

Further, the timing required for engaging the respective centering elements may be partly overlapping. For example, engaging the first centering element may take a longer period of time, than engaging the second centering element. Thus, the start and end of the engaging motion of the first centering element may sandwich the entire engaging motion of the second centering element. The timing may be adapted by providing recesses and/or protrusions at the respective centering element and/or corresponding centering element with different depths or heights, respectively.

For example, first and second centering elements may be configured so that engaging the first centering element starts prior to engaging the second centering element. In this case, the centering sub-system is firstly guided along the first guiding axis. After the second centering element starts to engage with the second corresponding centering element, the sub-system is (also) guided along the second guiding axis until the centering position is achieved (i.e. until the centering sub-system is centered) and the centering elements are in engagement. As the first and second guiding axis are nonparallel, the centering position is defined by the orientation of these two guiding axes.

Particularly, the first or second centering element may be oriented so that the associated guiding axis is oriented along a main thermal expansion direction of a part that is associated with the centering sub-system. This allows improved compensation of thermal expansion due to relative movement, as described above. In case the associated part includes two main thermal expansion directions, the centering elements may be oriented so that the first guiding axis is oriented along a first main thermal expansion direction of the part and the second guiding axis is oriented along a second main thermal expansion direction of the part.

The centering sub-system may further include a third centering element. The third centering element defines a guiding axis and is adapted to engage with a third corresponding centering element of a corresponding centering sub-system. Engaging of the third centering element may be along the engaging direction of the first centering element. Further, the third centering element is configured to allow a relative movement between the third centering element and the third corresponding centering element along the guiding axis of the third centering element, wherein the third centering element is arranged relative to the first centering element so that the guiding axis of the third centering element is aligned with the first guiding axis.

By providing a further, i.e. third, centering element the precision of the centering can be improved and the guiding along the first guiding axis is improved. This is, as the relative movement along the first guiding axis is supported by the first and the third centering elements and respective corresponding centering elements.

The centering sub-system may further include a fourth centering element. The fourth centering element defines a guiding axis and is adapted to engage with a fourth corresponding centering element of a corresponding centering sub-system. The fourth centering element is configured to allow a relative movement between the fourth centering element and the fourth corresponding centering element along the guiding axis of the fourth centering element. Further, the fourth centering element is arranged relative to the second centering element so that the guiding axis of the fourth centering element is aligned with the second guiding axis.

By providing a further, i.e. fourth, centering element the precision of the centering can be further improved and the guiding along the second guiding axis is improved. This is, as the relative movement along the second guiding axis is supported by the second and the fourth centering elements and respective corresponding centering elements.

Further, at least one centering element may comprise a first guiding face. The first guiding face is configured to guide a respective corresponding centering element into engagement with the centering element, so as to be centered on the guiding axis of the centering element. Optionally, the at least one centering element may comprise a second guiding face, wherein the second guiding face is configured to guide the respective corresponding centering element into engagement with the centering element, so as to be centered on the guiding axis of the centering element. In other words, the first and/or second guiding face guides engaging.

The guiding surface(s) allow to guide the engaging motion in engaging direction. Thus, the centering element can be self-centering with respect to the corresponding centering element. Accordingly, the corresponding centering element is centered on the guiding axis of the centering element. By providing at least first and second centering elements and thus first and second guiding axes, the centering sub-system is a self-centering sub-system, i.e. it is guided into centering when engaging with corresponding centering elements of a corresponding centering sub-system.

The first guiding face and the second guiding face of the at least one centering element may be arranged to enclose an angle a, particularly an acute angle α. For example, the centering element may include a substantially trapezoidal shape, wherein the first guiding face and the second guiding face are provided on the trapezoidal shape. Further, the centering element may include a substantially triangular form, or the like. The first guiding face and the second guiding face may be protruding faces or recessed faces. Further, different centering elements of a centering sub-system may be shaped differently or substantially identical. By varying the angle a, the guiding (e.g. timing) of the engaging motion in engaging direction can be controlled.

The at least one centering element may comprise a recess, wherein the recess may be configured to define the guiding axis of the centering element. Further, the recess may include at least one guiding face. By defining the depths of the recess, the period in time required for engaging the respective centering element can be controlled. A lager depth leads to a longer period in time required for engaging the respective centering element. Further, the recess may be formed in a tip portion of a protruding element.

The at least one centering element may comprise a protrusion, wherein the protrusion may be configured to define the guiding axis the centering element. Further, the protrusion may include at least one guiding face. By defining the height of the protrusion, the period in time required for engaging the respective centering element can be controlled. Further, the protrusion may be formed on a tip portion of a protruding element. Different centering elements of a centering sub-system may be shaped differently. For example, the first centering element may include a recess, wherein the second centering element includes a protrusion, or vice versa.

The centering sub-system comprises a ground plate, wherein the ground plate comprises at least one receptacle that holds a centering element, and wherein the receptacle is configured to thermally decouple the centering element from the ground plate. Thermal decoupling can e.g. be achieved by a sleeve formed around the centering element that is held in the receptacle, wherein the sleeve is (at least partially) made of a thermal insulator, such as a plastic material. Thus, transferring temperature changes to the centering element can be prevented or at least minimized. Accordingly, thermal deformation/expansion of the centering element is reduced. This allows a more precise centering.

The ground plate may also comprise multiple receptacles, for holding multiple or all centering elements of the centering sub-system, wherein each receptacle may be configured to thermally decouple the centering element from the ground plate.

Further, the at least one centering element may be supported by an elastic means (e.g. a spiral spring, or the like). Particularly, the at least one centering element may be supported by an elastic means, so as to be supported axially displaceable in an engaging direction. Thus, an impact between the centering element and a corresponding centering element during engaging (particularly, at the start and the end of the engaging) can be reduced. This allows to reduce wearing. Further, the elastic means may be configured to compensate for an axial thermal expansion of the centering element in engaging direction.

The object is further achieved by a centering system, comprising a first centering sub-system and a second centering sub-system. The first centering subsystem may be a sub-system as described above, comprising centering elements. The second centering sub-system may be a centering sub-system as described above, wherein the centering elements of the second centering sub-system are centering elements that are corresponding centering elements of the centering elements of the first centering sub-system. Thus, the second centering sub-system is a corresponding centering sub-system for the first centering sub-system.

The first centering sub-system is adapted to be associated with a first part and the corresponding second centering sub-system is adapted to be associated with a second part, wherein the first part is centered with respect to the second part, when the centering elements of the first centering sub-system are in engagement with the corresponding centering elements of the second centering sub-system.

The object is further achieved by an injection mold, including an injection mold-half, comprising a mold cavity and at least one centering sub-system as described above, wherein the centering sub-system is associated with the mold cavity. Thus, a further part, such as a gripping device, can be centered precisely and independently of the operation temperature of the injection mold relative to the mold cavity, by using the centering sub-system.

The object is further achieved by a separating device, comprising a separating means and at least one centering sub-system as described above, wherein the separating means is configured to provide separated inserts to be overmolded and/or to separate injection molded parts from a sprue and wherein the centering sub-system is associated with the separating means. Thus, a further part, such as a gripping device, can be centered precisely relative to the separating means, allowing for a precise gripping of provided separated inserts and/or for a precise separation of molded parts. Thus, the risk of damaging inserts during injection molding and/or injection molded parts during separation can be reduced. The insert may be a metallic based insert, a plastic based insert and/or a ceramic based insert.

The object is further achieved by a gripping device, adapted for removing molded parts from an injection mold and/or for transferring gripped molded parts to a separating device. The gripping device may further be adapted for gripping at least one insert provided by a separating device, to transfer the at least one insert to an injection mold and/or to place the at least one insert in a mold cavity for e.g. over molding said insert.

The gripping device comprises a gripping means and at least one centering sub-system as described above, wherein the centering sub-system is associated with the gripping means, and wherein the centering sub-system is adapted to engage with the centering sub-system of the injection mold and/or the centering sub-system of the separating device. In other words, the injection mold and/or the separating device may each comprise a first centering sub-system and the gripping device may comprise a second corresponding centering sub-system.

The object is further achieved by an injection mold system, comprising an injection mold, a gripping device, and optionally a separating device, as described above.

The object is further achieved by a method for centering two parts relative to each other, the method comprising the following steps:
- providing a first part, the first part being associated with a first centering sub-system as described above,
- providing a second part, the second part being associated with a second centering sub-system, wherein the second centering sub-system is a corresponding centering sub-system for the first centering sub-system,
- engaging a first centering element of the first centering sub-system with a first corresponding centering element of the second centering sub-system, and
- engaging a second centering element of the first centering sub-system with a second corresponding centering element of the second centering sub-system, thereby centering the first part with respect to the second part.

For example, the first part may be a gripping means of a gripping device and the second part may be a mold cavity of an injection mold or a separating means of a separating device. The motion for engaging the centering elements of the first centering sub-system with corresponding centering elements of the second centering sub-system may be a manual motion or an automated motion. In case of an automated motion, the first part (such as a gripper) may be provided on an industrial robot that moves the first part.

### Brief Description of the Figures

In the following, the accompanying figures are briefly described:
Figure 1 schematically shows a centering sub-system;
Figure 2A schematically shows a cut view of a centering element and a corresponding centering element;
Figure 2B schematically shows a perspective view of a centering element;
Figure 2C schematically shows a perspective view of a corresponding centering element;
Figure 3 schematically shows a cut view of a centering element, being held in a ground plate;
Figure 4 schematically shows a top view of an injection mold, comprising two corresponding centering sub-systems;
Figure 5 schematically shows a top view of a gripping device, comprising two centering sub-systems;
Figure 6 schematically shows a top view of a separating device, comprising two corresponding centering sub-systems;
Figure 7 schematically shows an injection mold system, and
Figure 8 schematically shows a flow diagram of a method for centering two parts.

### Detailed Description of the Figures

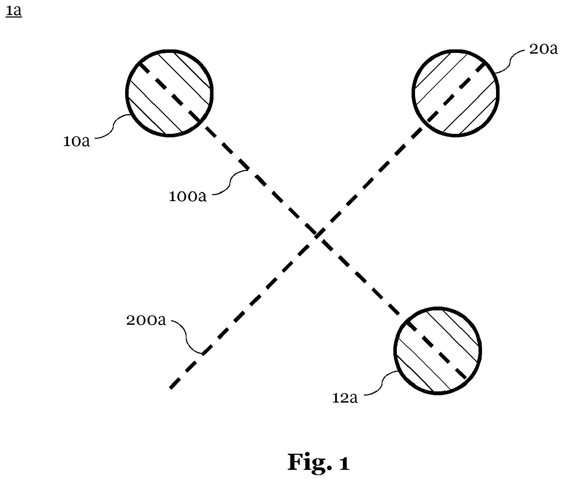

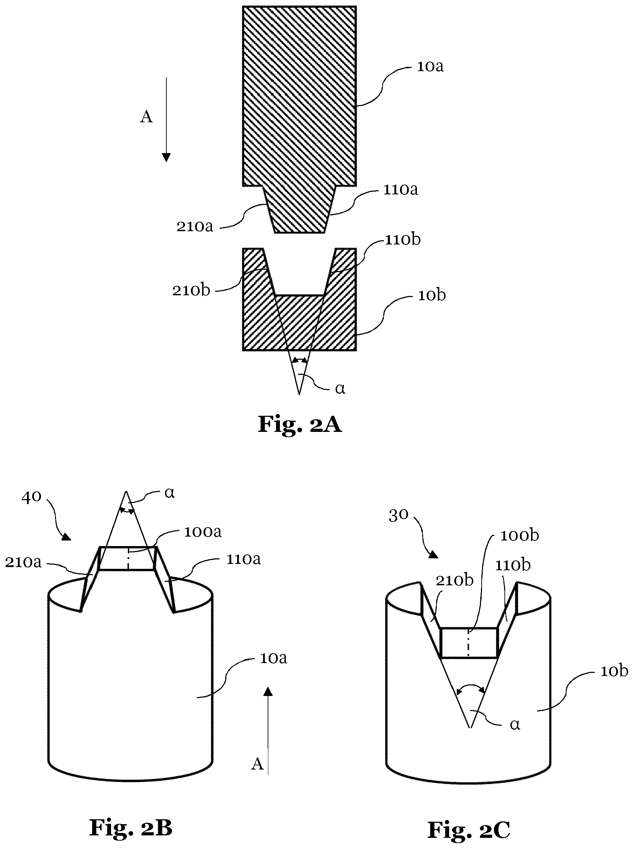

Figure 1 schematically shows a centering sub-system 1a. The centering sub-system 1a includes a first centering element 10a and a second centering element 20a. The first centering element 10a defines a first guiding axis 100a and is adapted to engage with a first corresponding centering element (not shown, cf. Figures 2A or 2C) of a corresponding centering sub-system along an engaging direction A. The first centering element 10a is configured to allow a relative movement between the first centering element 10a and the first corresponding centering element along the first guiding axis 100a during engaging.

The second centering element 20a defines a second guiding axis 200a and is adapted to engage with a second corresponding centering element of the corresponding centering sub-system, wherein the second centering element 20a is configured to allow a relative movement between the second centering element 20a and the second corresponding centering element along the second guiding axis 200a during engaging. The first guiding axis 100a and the second guiding axis 200a are nonparallel. Further, the first guiding axis 100a and the second guiding axis 200a are different from the engaging direction A.

The centering sub-system 1a, as shown in Figure 1, further includes a third centering element 12a. The third centering element defines a guiding axis and is adapted to engage with a third corresponding centering element of a corresponding centering sub-system. The third centering element 12a is configured to allow a relative movement between the third centering element 12a and the third corresponding centering element along the guiding axis of the third centering element 12a. The third centering element 12a is arranged relative to the first centering element 10a so that the guiding axis of the third centering element is aligned with the first guiding axis 100a.

Figure 2A schematically shows a cut view of a centering element 10a and a corresponding centering element 10b. The centering element 10a defines a guiding axis that protrudes perpendicularly from the image plane in Figure 2A, as shown. The centering element 10a comprises a first guiding face 110a. The first guiding face 110a is configured to guide a respective corresponding centering element 10b into engagement with the centering element 10a along the engaging direction A, so as to be centered on the guiding axis of the centering element 10a. Further, the centering element comprises a second guiding face 210a, wherein the second guiding face 210a is configured to guide the corresponding centering element 10b into engagement with the centering element 10a, so as to be centered on the guiding axis 100a of the centering element 10a. The first guiding face 110a and the second guiding face 210a are arranged, in the embodiment shown in Figure 2A, to enclose an acute angle a.

Likewise, the corresponding centering element 10b defines a guiding axis 100b that protrudes perpendicularly from the image plane in Figure 2A, as shown. The corresponding centering element 10b comprises a first guiding face 110b. The first guiding face 110b is configured to guide the centering element 10a into engagement with the corresponding centering element 10b, so as to be centered. Further, the corresponding centering element 10b comprises a second guiding face 210b, wherein the second guiding face 210b is configured to guide the centering element 10a into engagement with the corresponding centering element 10b, so as to be centered on the guiding axis. The first guiding face 110b and the second guiding face 210b are arranged, in the embodiment shown in Figure 2A, to enclose an acute angle a. The angle α defined by the centering element 10a and the angle α defined by the corresponding centering element 10b are substantially the same.

Figure 2B schematically shows a perspective view of the centering element 10a of Figure 2A. The centering element 10a comprises a protrusion 40, wherein the protrusion 40 is configured to define the guiding axis 100a of the centering element. Particularly, the guiding axis 100a is defined by first and second guiding faces 110a and 210a of the protrusion 40. Here, the protrusion 40 may be formed on a tip portion of a protruding element of the centering element.

Figure 2C schematically shows a perspective view of the corresponding centering element 10b of Figure 2A. The corresponding centering element 10b comprises a recess 30, wherein the recess 30 is configured to define the guiding axis 100b of the corresponding centering element. Particularly, the guiding axis 100b is defined by first and second guiding faces 110b and 210b of the recess 30. The recess 30 may be formed in a tip portion of a protruding element.

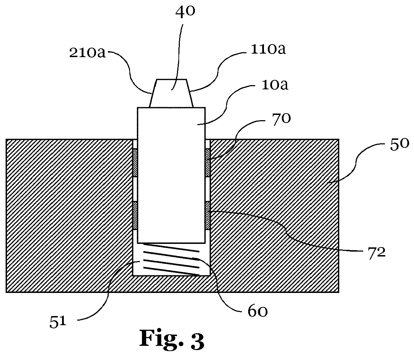

Figure 3 schematically shows a cut view of a centering element 10a, being held in a ground plate 50. The ground plate 50 comprises a receptacle 51 that holds the centering element 10a. Further, the ground plate 50 may comprise further receptacles 51, for holding further centering elements. The receptacle 51 is configured to thermally decouple the centering element 10a from the ground plate 50, e.g. by support means 70, 72. Said support means may be axial bearings. Further, in the embodiment shown in Figure 3, the at least one centering element 10a is supported by an elastic means 60 (such as a spiral spring), so as to be supported axially displaceable in an engaging direction A.

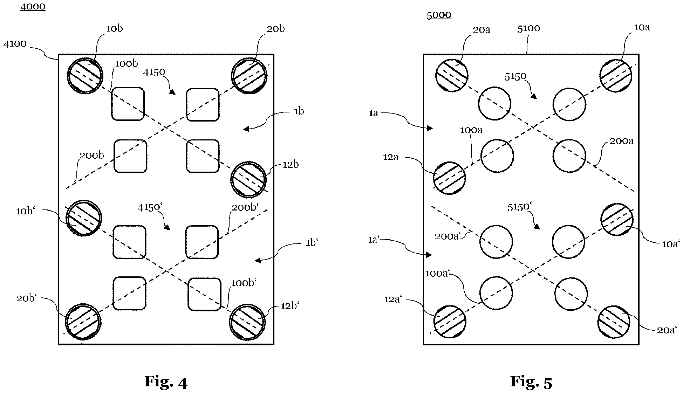

Figure 4 schematically shows a top view of an injection mold 4000. The injection mold 4000 comprises two corresponding centering sub-systems 1b and 1b', wherein the corresponding centering sub-systems 1b, is associated with a mold cavity 4150 of the injection mold 4000 and wherein the corresponding centering sub-systems 1b' is associated with a further mold cavity 4150' of the injection mold 4000. Each of the corresponding centering sub-systems 1b, 1b' includes a first corresponding centering element 10b, 10b' and a second corresponding centering element 20b, 20b', respectively. The first corresponding centering element 10b, 10b' defines a first guiding axis 100b, 100b' and is adapted to engage with a first centering element 10a, 10a' (as e.g. shown in Figure 5) of a centering sub-system 1a along an engaging direction A. The first corresponding centering element 10b, 10b' is configured to allow a relative movement between the first centering element 10a and the first corresponding centering element 10b, 10b' along the first guiding axis 100b, 100b' during engaging. The second corresponding centering element 20b, 20b' defines a second guiding axis 200b, 200b' and is adapted to engage with a second centering element 20a, 20a' of the centering sub-system 1a, wherein the second centering element 20a is configured to allow a relative movement between the second centering element 20a and the second corresponding centering element 20b, 20b' along the second guiding axis 200b during engaging. The respective first guiding axis 100b, 100b' and the second guiding axis 200b, 200b' are nonparallel. Further, the respective first guiding axis 100b, 100b' and the second guiding axis 200b, 200b' are different from the engaging direction A.

The corresponding centering sub-systems 1b, 1b' each include a third centering element 12b, 12b', respectively. The third 12b, 12b' centering element 12b, 12b' defines a guiding axis and is adapted to engage with a third centering element 12a, 12a' of the centering sub-system 1a. The third centering element 12a, 12a' is configured to allow a relative movement between the third centering element 12a, 12a' and the third corresponding centering element 12b, 12b'along the guiding axis of the third centering element 12a, 12a'. The third corresponding centering element 12b, 12b' is arranged relative to the first corresponding centering element 10b, 10b' so that the guiding axis of the third corresponding centering element is aligned with the first guiding axis 100b, 100b'.

In a further embodiment, the injection mold 4000 may include a single corresponding centering sub-system, or multiple corresponding centering sub-systems.

Figure 5 schematically shows a top view of a gripping device 5000. The gripping device 5000 comprises a gripping means 5100, e.g. a vacuum gripping means, a pneumatic gripping means 5150, 5150', and/or any other known gripping means. The gripping device 5000 further comprises two centering sub-systems 1a, 1a'. The gripping device 5000 may be adapted for removing molded parts from an injection mold 4000 and/or for transferring gripped molded parts to a separating device 6000. Alternatively and/or additionally, the gripping device 5000 may be adapted for transferring at least one insert into the injection mold 4000 and/or for placing the at least one insert in a mold cavity for e.g. over molding said insert.

For example, a gripping device, comprising e.g. a pneumatic gripper may grip at least one insert, such as a metallic insert (e.g. a needle or cannula) from a separating device that provides separated inserts. The separating device may e.g. provide at least two, preferably at least four and most preferably at least eight separated inserts that are gripped separately by the gripping device and transferred to a respective injection mold and/or placed separately in respective mold cavities. As the gripping device, the separating device and the injection mold comprise respective centering sub-systems, it can be guaranteed that the inserts are precisely gripped, transferred and placed. Thus, high quality injection molded parts (such as syringe needles/cannulas) can be provided.

The centering sub-system 1a is associated with the gripping means 5100, particularly with vacuum gripping means, a pneumatic gripping means5150, and/or the like. The centering sub-system 1a' is associated with the gripping means 5100, particularly with vacuum gripping means, a pneumatic gripping means 5150', and/or the like. Both centering sub-systems 1a, 1a' may be adapted to engage with a corresponding centering sub-system 1b of the injection mold 4000 and/or the centering sub-system 1C of the separating device 6000.

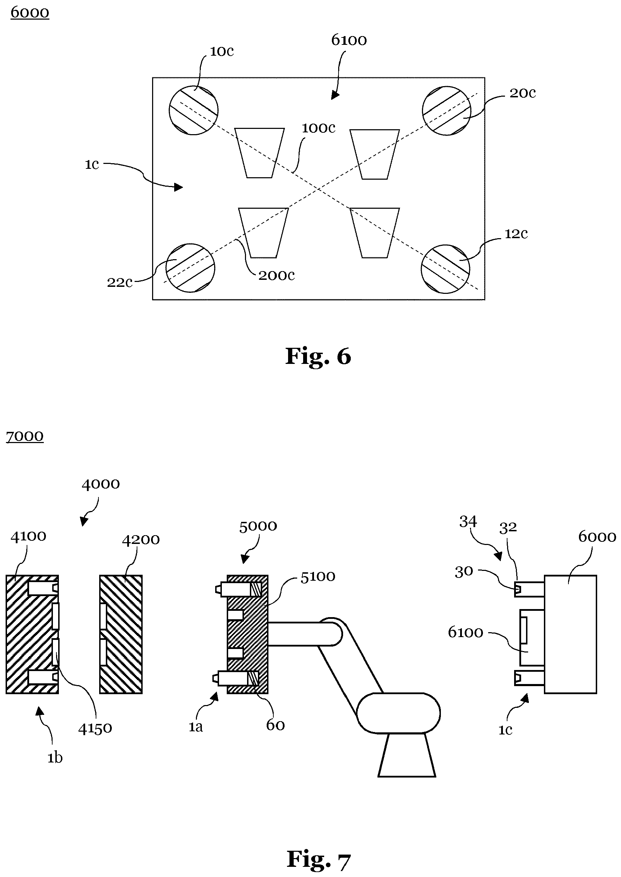

Each of the centering sub-systems 1a, 1a' includes a first centering element 10a, 10a' and a second centering element 20a, 20a', respectively. The first centering element 10a, 10a' defines a first guiding axis 100a, 100a' and is adapted to engage with a first corresponding centering element 10b, 10b' (as e.g. shown in Figure 4) of a centering sub-system 1b and/or with a first corresponding centering element 10c, 10c' (as e.g. shown in Figure 6) of a centering sub-system 1C along an engaging direction A.

The first centering element 10a, 10a' is configured to allow a relative movement between the first centering element 10a, 10a' and the first corresponding centering element 10b, 10b', 10c, 10c' along the first guiding axis 100a, 100a' during engaging.

The second centering element 20a, 20a' defines a second guiding axis 200a, 200a' and is adapted to engage with a second corresponding centering element 20b, 20b', 20c, 20C' of the corresponding centering sub-system 1b, 1c, wherein the second centering element 20a, 20a' is configured to allow a relative movement between the second centering element 20a, 20a' and the second corresponding centering element 20b, 20b', 20C, 20C' along the second guiding axis 200a during engaging. The respective first guiding axis 100a, 100a' and the second guiding axis 200a, 200a' are nonparallel. Further, the respective first guiding axis 100a, 100a' and the second guiding axis 200a, 200a' are different from the engaging direction A.

Each of the centering sub-systems 1a, 1a' includes a third centering element 12a, 12a', respectively. The third centering element 12a, 12a'defines a guiding axis and is adapted to engage with a third centering element 12b, 12b' of the centering sub-system 1b. The third centering element 12a, 12a' is configured to allow a relative movement between the third centering element 12a, 12a' and the third corresponding centering element 12b, 12b' along the guiding axis of the third centering element 12a, 12a'. The third centering element 12a, 12a' is arranged relative to the first centering element 10a, 10a' so that the guiding axis of the third centering element is aligned with the first guiding axis 100a, 100a'.

In a further embodiment, the gripping device 5000 may include a single corresponding centering sub-system, or multiple corresponding centering sub-systems.

Figure 6 schematically shows separating device 6000, comprising a separating means 6100 and at least one centering sub-system 1c. The separating means 6100 is configured to provide separated inserts to be overmolded and/or to separate injection molded parts from a sprue. Further, the centering sub-system 1c is associated with the separating means 6100. Thus, e.g. a gripping device that transfers inserts from the separating device 6000 to an injection mold and/or molded parts from an injection mold 4000 to the separating device 6000 can be precisely centered with respect to the separating means.

The centering sub-system 1c is a corresponding centering sub-system 1c for the centering sub-systems 1a and 1a'. The corresponding centering sub-system 1c includes a first corresponding centering element 10c and a second corresponding centering element 20c. The first corresponding centering element 10c defines a first guiding axis 100c and is adapted to engage with either one of first centering element 10a, 10a' (as e.g. shown in Figure 5) of a centering sub-system 1a or 10a' along an engaging direction A.

The first corresponding centering element 10c is configured to allow a relative movement between the first centering element 10a and the first corresponding centering element 10c along the first guiding axis 100c during engaging. The second corresponding centering element 20c defines a second guiding axis 200c and is adapted to engage with a second centering element 20a of the centering sub-system 1a, wherein the second centering element 20a is configured to allow a relative movement between the second centering element 20a and the second corresponding centering element 20c along the second guiding axis 200c during engaging. The first guiding axis 100c and the second guiding axis 200c are nonparallel. Further, the first guiding axis 100c and the second guiding axis 200c are different from the engaging direction A.

The corresponding centering sub-systems 1c further includes a third corresponding centering element 12c. The third corresponding centering element 12c defines a guiding axis and is adapted to engage with either one of third centering elements 12a, 12a' of the centering sub-system 1a or 1a'. The third corresponding centering element 12c is configured to allow a relative movement between the third centering element 12a, 12a' and the third corresponding centering element 10c along the guiding axis of the corresponding third centering element 12c. The third corresponding centering element 12c is arranged relative to the first corresponding centering element 10c so that the guiding axis of the third corresponding centering element is aligned with the first guiding axis 100c.

The corresponding centering sub-systems 1c further includes a fourth corresponding centering element 22c. The fourth corresponding centering element 22c defines a guiding axis and is adapted to engage with a fourth centering element or the centering element 20a' of the centering sub-system 1a'. The fourth corresponding centering element 22c is configured to allow a relative movement between the centering element 20a' and the fourth corresponding centering element 22c along the guiding axis of the corresponding fourth centering element 22c. The fourth corresponding centering element 22c is arranged relative to the first corresponding centering element 10c so that the guiding axis of the fourth corresponding centering element is aligned with the second guiding axis 200c.

Figure 7 schematically shows an injection mold system 7000. The system comprises an injection mold 4000, a gripping device 5000 and optionally at least one separating device 6000. The injection mold 4000 includes two mold halves 4100, 4200 and at least one mold cavity 4150 and an associated centering sub-system 1b. The gripping device 5000 may be arranged on an industrial robot and comprises at least one gripping means 5100 (e.g. a vacuum gripping means, a pneumatic gripping means, and/or the like) and an associated centering system 1a. The centering element(s) 10a may be supported by an elastic means 60 (such as a spiral spring), as e.g. shown in Figure 3, so as to be supported axially displaceable in an engaging direction A. The at least one separating device 6000 includes a separating means 6100 that is configured to provide separated inserts to be overmolded and/or to separate injection molded parts from a sprue. Particularly, multiple separating devices may be provided, wherein a first separating device may be configured to provide separated inserts to be overmolded and wherein a second separating device may be configured to separate injection molded parts from a sprue. Further the at least one separating device 6000 includes corresponding centering sub-system 1c. The corresponding centering elements of the corresponding centering sub-system 1c, may comprise a recess 30. The recess may be configured to define the guiding axis of the centering element, wherein the recess 30 may be formed in a tip portion 32 of a protruding element 34.

The centering elements of the centering sub-system 1a are configured to engage with the corresponding centering elements of the corresponding centering sub-system 1b and 1c. Accordingly, the gripping device can be centered precisely relative to the injection mold 4000 and the separating device 6000.

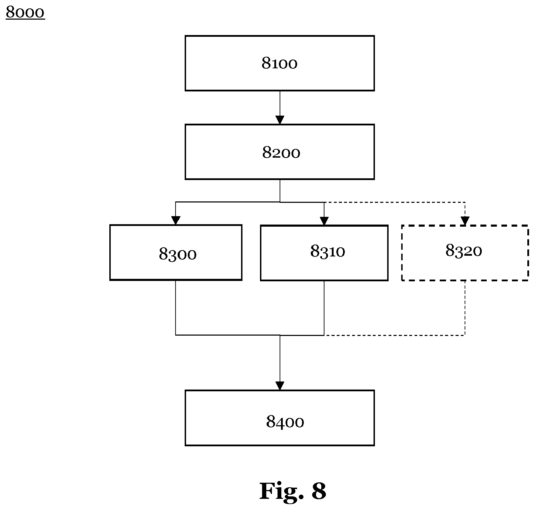

Figure 8 schematically shows a flow diagram of a method 8000 for centering two parts (e.g. a gripping means 5100 of a gripping device 5000 and a mold cavity 4150 of an injection mold or a gripping means 5100 of a gripping device 5000 gripping means 5100 of a gripping device 5000 and a separating means 6100 of a separating device 6000, as shown in Figure 7) relative to each other.

The method 8000 comprises the steps of: Providing 8100 a first part, the first part being associated with a first centering sub-system 1a, as e.g. shown in Figure 5. Providing 8200 a second part, the second part being associated with a second centering sub-system 1b or 1c), as e.g. shown in Figures 4 and 6. The second centering sub-system 1b, 1c is a corresponding centering sub-system 1b, 1c for the first centering sub-system 1a. Engaging 8300 a first centering element 10a of the first centering sub-system 1a with a first corresponding centering element 10b, 10c of the second centering sub-system 1b, 1c. Engaging 8310 a second centering element 20a of the first centering sub-system 1a with a second corresponding centering element 20b of the second centering sub-system 1b, 1c, thereby centering 8400 the first part with respect to the second part. Optionally, the method comprises the step of engaging 8320 a third and/or fourth centering element 12a, 22a of the first centering sub-system 1a with a second corresponding centering element 12b, 22b, 12c 22cof the second centering sub-system 1b, 1c, thereby centering 8400 the first part with respect to the second part. In particular, method steps 8300, 8310 and 8320 (i.e. the engaging steps) may be carried out after one another or at the same time.

The first part may be a the gripping means 5100 of a gripping device 5000, as shown in Figure 5 and the second part may be a mold cavity 4150 of an injection mold as shown in Figure 4 and/or the second part may be a separating means 6100 of a separating device 6000 as shown in Figure 6.

### List of Reference Signs

- 1a, 1a': centering sub-system
- 1b, 1b': (corresponding) centering sub-system
- 1c, 1c': (corresponding) centering sub-system
- 10a, 10a': first centering element
- 10b, 10b': first (corresponding) centering element
- 10c, 10c': first (corresponding) centering element
- 12a, 12a': third centering element
- 12b, 12b': third (corresponding) centering element
- 12c: third (corresponding) centering element
- 20a, 20a': second centering element
- 20b, 20b': second (corresponding) centering element
- 20c: second (corresponding) centering element
- 22c: fourth (corresponding) centering element
- 30: recess
- 32: tip portion
- 34: protruding element
- 40: protrusion
- 50: ground plate
- 51: receptacle
- 60: elastic means
- 70. 72: support means
- 100a, 100a': first guiding axis
- 100b, 100b': first guiding axis
- 100c, 100c': first guiding axis
- 110a: first guiding face
- 110b: first (corresponding) guiding face
- 200a, 200a': second guiding axis
- 200b, 200b': second guiding axis
- 200c, 200c': second guiding axis
- 210a: second guiding face
- 210b: second (corresponding) guiding face
- 4000: injection mold
- 4100: mold half
- 4150, 4150': mold cavity
- 4200: mold half
- 5000: gripping device
- 5100: gripping means
- 5150, 5150': pneumatic gripping means
- 6000: separating device
- 6100: separating means
- 7000: injection mold system
- 8000: method
- 8100, 8200: providing
- 8300, 8310: engaging
- 8320: engaging
- 8400: centering
- α: angle

## Claims

1. A centering sub-system (1a) including a first centering element (10a), a second centering element (20a) and a ground plate (50), wherein
the first centering element (10a) defines a first guiding axis (100a) and
is adapted to engage with a first corresponding centering element (10b, 10c) of a corresponding centering sub-system (1b, 1c) along an engaging direction (A), wherein the first centering element (10a) is configured to allow a relative movement between the first centering element (10a) and the first corresponding centering element (10b, 10c) along the first guiding axis (100a) during engaging; wherein
the second centering element (20a) defines a second guiding axis (200a) and
is adapted to engage with a second corresponding centering element (20b) of the corresponding centering sub-system (1b, 1c), wherein the second centering element (20a) is configured to allow a relative movement between the second centering element (20a) and the second corresponding centering element (20b, 20c) along the second guiding axis (200a) during engaging; and wherein
the first guiding axis (100a) and the second guiding axis (200a) are nonparallel, and wherein each of the first guiding axis (100a) and the second guiding axis (200a) is different from the engaging direction (A),
wherein the ground plate (50) comprises at least one receptacle (51) that holds a centering element (10a, 12a, 20a, 22a), and wherein the receptacle (51) is configured to thermally decouple the centering element (10a, 12a, 20a, 22a) from the ground plate (50).

2. The centering sub-system (1a) of claim 1, further including
a third centering element (12a) defining a guiding axis, and being adapted to engage with a third corresponding centering element (12b, 12c) of a corresponding centering sub-system (1b, 1c), wherein the third centering element (12a) is configured to allow a relative movement between the third centering element (12a) and the third corresponding centering element (12b, 12c) along the guiding axis of the third centering element (12a), and wherein
the third centering element (12a) is arranged relative to the first centering element (10a) so that the guiding axis of the third centering element (12a) is aligned with the first guiding axis (100a).

3. The centering sub-system (1a) of claim 1 or 2, further including
a fourth centering element (22a) defining a guiding axis, and being adapted to engage with a fourth corresponding centering element (22b, 22c) of a corresponding centering sub-system (1b, 1c), wherein the fourth centering element (22a) is configured to allow a relative movement between the fourth centering element (22a) and the fourth corresponding centering element (22b, 22c) along the guiding axis of the fourth centering element (22a), and wherein
the fourth centering element (22a) is arranged relative to the second centering element (20a) so that the guiding axis of the fourth centering element (22a) is aligned with the second guiding axis (100a).

4. The centering sub-system (1a) of any preceding claim, wherein at least one centering element (10a, 12a, 20a, 22a) comprises
a first guiding face (110a), the first guiding face (110a) being configured to guide a respective corresponding centering element (10b, 10c, 12b, 12c, 20b, 20c, 22b, 22c) into engagement with the centering element (10a, 12a, 20a, 22a), so as to be centered on the guiding axis (100a, 200a) of the centering element (10a, 12a, 20a, 22a), and optionally
a second guiding face (210a), wherein the second guiding face (210a) is configured to guide the respective corresponding centering element (10b, 10c, 12b, 12c, 20b, 20c, 22b, 22c) into engagement with the centering element (10a, 12a, 20a, 22a), so as to be centered on the guiding axis (100a, 200a) of the centering element (10a, 12a, 20a, 22a), wherein
the first guiding face (110a) and the second guiding face (210a) may be arranged to enclose an angle (α), particularly an acute angle (α).

5. The centering sub-system (1a) of any preceding claim, wherein at least one centering element (10a, 12a, 20a, 22a) comprises a recess (30), the recess (30) being configured to define the guiding axis (100b) of the centering element, wherein the recess (30) may be formed in a tip portion (32) of a protruding element (34).

6. The centering sub-system (1a) of any preceding claim, wherein at least one centering element (10a, 12a, 20a, 22a) comprises a protrusion (40), the protrusion (40) being configured to define the guiding axis (100a) of the centering element, wherein the protrusion (40) may be formed on a tip portion of a protruding element.

7. The centering sub-system (1a) of any preceding claim, wherein at least one centering element (10a, 12a, 20a, 22a) is supported by an elastic means (60), so as to be supported axially displaceable in an engaging direction.

8. A centering system, comprising a first centering sub-system (1a) according to any of claims 1 to 7 and a second centering sub-system (1b, 1c), wherein the second centering sub-system (1b, 1c) is a corresponding centering sub-system (1b, 1c) for the first centering sub-system (1a), wherein the first centering sub-system (1a) is adapted to be associated with a first part and the corresponding second centering sub-system (1b, 1c) is adapted to be associated with a second part, and wherein the first part is centered with respect to the second part, when the centering elements of the first centering sub-system are in engagement with the corresponding centering elements of the second centering sub-system (1b, 1c).

9. An injection mold (4000), including an injection mold-half (4100, 4200), comprising a mold cavity (4150) and at least one centering sub-system (1b) according to any of claims 1 to 7, wherein the centering sub-system (1b) is associated with the mold cavity (4150).

10. A separating device (6000), comprising a separating means (6100) and at least one centering sub-system (1c) according to any of claims 1 to 7, wherein the separating means (6100) is configured to provide separated inserts to be overmolded and/or to separate injection molded parts from a sprue, and wherein the centering sub-system (1c) is associated with the separating means (6100).

11. A gripping device (5000), adapted for removing molded parts from an injection mold (4000) according to claim 9 and/or for transferring gripped molded parts to a separating device (6000) according to claim 10 the gripping means may further be adapted for transferring inserts form a separating device (6000) according to claim 10 to an injection mold (4000) according to claim 9, the gripping device (5000) comprising a gripping means (5100) and at least one centering sub-system (1a) according to any of claims 1 to 7, wherein the centering sub-system (1a) is associated with the gripping means (5100), and wherein the centering sub-system (1a) is adapted to engage with the centering sub-system (1b) of the injection mold (4000) and/or the centering sub-system (1c) of the separating device (6000).

12. An injection mold system (7000), comprising
an injection mold (4000) according to claim 9,
a gripping device (5000) according to claim 11, and
optionally at least one separating device (6000) according to claim 10.

13. A method (8000) for centering two parts relative to each other, the method comprising
providing (8100) a first part, the first part being associated with a first centering sub-system (1a) according to any of claims 1 to 7;
providing (8200) a second part, the second part being associated with a second centering sub-system (1b, 1c), wherein the second centering sub-system (1b, 1c) is a corresponding centering sub-system (1b, 1c) for the first centering sub-system (1a),
engaging (8300) a first centering element (10a) of the first centering sub-system (1a) with a first corresponding centering element (10b, 10c) of the second centering sub-system (1b, 1c), and
engaging (8310) a second centering element (20a) of the first centering sub-system (1a) with a second corresponding centering element (20b) of the second centering sub-system (1b, 1c), thereby
centering (8400) the first part with respect to the second part.

14. The method (8000) of claim 13, wherein the first part is a the gripping means (5100) of a gripping device (5000) according to claim 11 and wherein the second part is a mold cavity (4150) of an injection mold (4000) according to claim 9 or wherein the second part is a separating means (6100) of a separating device (6000) according to claim 10.

## Patentansprüche

1. Zentrierungs-Teilsystem (1a) mit einem ersten Zentrierelement (10a), einem zweiten Zentrierelement (20a) und einer Grundplatte (50), wobei
das erste Zentrierelement (10a) eine erste Führungsachse (100a) definiert und
dazu eingerichtet ist, mit einem ersten korrespondierenden Zentrierelement (10b, 10c) eines korrespondierenden Zentrierungs-Teilsystems (1b, 1c) entlang einer Eingriffsrichtung (A) in Eingriff zu gelangen, wobei das erste Zentrierelement (10a) dazu eingerichtet ist, eine Relativbewegung zwischen dem ersten Zentrierelement (10a) und dem ersten korrespondierenden Zentrierelement (10b, 10c) entlang der ersten Führungsachse (100a) während des Eingriffs zu ermöglichen; wobei
das zweite Zentrierelement (20a) eine zweite Führungsachse (200a) definiert und
dazu eingerichtet ist, mit einem zweiten korrespondierenden Zentrierelement (20b) des korrespondierenden Zentrierungs-Teilsystems (1b, 1c) in Eingriff zu gelangen, wobei das zweite Zentrierelement (20a) dazu eingerichtet ist, eine Relativbewegung zwischen dem zweiten Zentrierelement (20a) und dem zweiten korrespondierenden Zentrierelement (20b, 20c) entlang der zweiten Führungsachse (200a) während des Eingriffs zu ermöglichen; und wobei
die erste Führungsachse (100a) und die zweite Führungsachse (200a) nicht parallel sind, und wobei jede der ersten Führungsachse (100a) und der zweiten Führungsachse (200a) von der Eingriffsrichtung (A) verschieden ist,
wobei die Grundplatte (50) mindestens eine Aufnahme (51) umfasst, die ein Zentrierelement (10a, 12a, 20a, 22a) hält, und wobei die Aufnahme (51) dazu eingerichtet ist, das Zentrierelement (10a, 12a, 20a, 22a) thermisch von der Grundplatte (50) zu entkoppeln.

2. Zentrierungs-Teilsystem (1a) nach Anspruch 1, ferner beinhaltend
ein drittes Zentrierelement (12a), das eine Führungsachse definiert und dazu eingerichtet ist, mit einem dritten korrespondierenden Zentrierelement (12b, 12c) eines korrespondierenden Zentrierungs-Teilsystems (1b, 1c) in Eingriff zu gelangen, wobei das dritte Zentrierelement (12a) dazu eingerichtet ist, eine Relativbewegung zwischen dem dritten Zentrierelement (12a) und dem dritten korrespondierenden Zentrierelement (12b, 12c) entlang der Führungsachse des dritten Zentrierelements (12a) zu ermöglichen, und wobei
das dritte Zentrierelement (12a) relativ zu dem ersten Zentrierelement (10a) so angeordnet ist, dass die Führungsachse des dritten Zentrierelements (12a) mit der ersten Führungsachse (100a) ausgerichtet ist.

3. Zentrierungs-Teilsystem (1a) nach Anspruch 1 oder 2, ferner beinhaltend
ein viertes Zentrierelement (22a), das eine Führungsachse definiert und dazu eingerichtet ist, mit einem vierten korrespondierenden Zentrierelement (22b, 22c) eines korrespondierenden Zentrierungs-Teilsystems (1b, 1c) in Eingriff zu gelangen, wobei das vierte Zentrierelement (22a) dazu eingerichtet ist, eine Relativbewegung zwischen dem vierten Zentrierelement (22a) und dem vierten korrespondierenden Zentrierelement (22b, 22c) entlang der Führungsachse des vierten Zentrierelements (22a) zu ermöglichen, und wobei
das vierte Zentrierelement (22a) relativ zu dem zweiten Zentrierelement (20a) so angeordnet ist, dass die Führungsachse des vierten Zentrierelements (22a) mit der zweiten Führungsachse (100a) ausgerichtet ist.

4. Zentrierungs-Teilsystem (1a) nach einem der vorhergehenden Ansprüche, wobei mindestens ein Zentrierelement (10a, 12a, 20a, 22a) umfasst
eine erste Führungsfläche (110a), wobei die erste Führungsfläche (110a) dazu eingerichtet ist, ein jeweiliges korrespondierendes Zentrierelement (10b, 10c, 12b, 12c, 20b, 20c, 22b, 22c) in Eingriff mit dem Zentrierelement (10a, 12a, 20a, 22a) zu führen, um auf der Führungsachse (100a, 200a) des Zentrierelements (10a, 12a, 20a, 22a) zentriert zu sein, und optional
eine zweite Führungsfläche (210a), wobei die zweite Führungsfläche (210a) dazu eingerichtet ist, das jeweilige korrespondierende Zentrierelement (10b, 10c, 12b, 12c, 20b, 20c, 22b, 22c) in Eingriff mit dem Zentrierelement (10a, 12a, 20a, 22a) zu führen, um auf der Führungsachse (100a, 200a) des Zentrierelements (10a, 12a, 20a, 22a) zentriert zu sein, wobei
die erste Führungsfläche (noa) und die zweite Führungsfläche (210a) so angeordnet sein können, dass sie einen Winkel (α), insbesondere einen spitzen Winkel (α), einschließen.

5. Zentrierungs-Teilsystem (1a) nach einem der vorhergehenden Ansprüche, wobei mindestens ein Zentrierelement (10a, 12a, 20a, 22a) eine Aussparung (30) umfasst, wobei die Aussparung (30) dazu eingerichtet ist, die Führungsachse (100b) des Zentrierelements zu definieren, wobei die Aussparung (30) in einem Spitzenabschnitt (32) eines vorstehenden Elements (34) ausgebildet sein kann.

6. Zentrierungs-Teilsystem (1a) nach einem der vorhergehenden Ansprüche, wobei mindestens ein Zentrierelement (10a, 12a, 20a, 22a) einen Vorsprung (40) umfasst, wobei der Vorsprung (40) dazu eingerichtet ist, die Führungsachse (100a) des Zentrierelements zu definieren, wobei der Vorsprung (40) an einem Spitzenabschnitt eines vorstehenden Elements ausgebildet sein kann.

7. Zentrierungs-Teilsystem (1a) nach einem der vorhergehenden Ansprüche, wobei mindestens ein Zentrierelement (10a, 12a, 20a, 22a) durch ein elastisches Mittel (60) gestützt ist, um in einer Eingriffsrichtung axial verschiebbar gestützt zu sein.

8. Zentrierungs-System, umfassend ein erstes Zentrierungs-Teilsystem (1a) nach einem der Ansprüche 1 bis 7 und ein zweites Zentrierungs-Teilsystem (1b, 1c), wobei das zweite Zentrierungs-Teilsystem (1b, 1c) ein korrespondierendes Zentrierungs-Teilsystem (1b, 1c) für das erste Zentrierungs-Teilsystem (1a) ist, wobei das erste Zentrierungs-Teilsystem (1a) dazu eingerichtet ist, mit einem ersten Teil assoziiert zu sein, und das korrespondierende zweite Zentrierungs-Teilsystem (1b, 1c) dazu eingerichtet ist, mit einem zweiten Teil assoziiert zu sein, und wobei der erste Teil in Bezug auf den zweiten Teil zentriert ist, wenn die Zentrierelemente des ersten Zentrierungs-Teilsystems mit den korrespondierenden Zentrierelementen des zweiten Zentrierungs-Teilsystems (1b, 1c) in Eingriff sind.

9. Spritzgussform (4000) mit einer Spritzgussformhälfte (4100, 4200), umfassend einen Formhohlraum (4150) und mindestens ein Zentrierungs-Teilsystem (1b) nach einem der Ansprüche 1 bis 7, wobei das Zentrierungs-Teilsystem (1b) mit dem Formhohlraum (4150) assoziiert ist.

10. Trennvorrichtung (6000), umfassend ein Trennmittel (6100) und mindestens ein Zentrierungs-Teilsystem (1c) nach einem der Ansprüche 1 bis 7, wobei das Trennmittel (6100) dazu eingerichtet ist, getrennte Einsätze bereitzustellen, die umspritzt werden sollen, und/oder spritzgussgeformte Teile von einem Anguss zu trennen, und wobei das Zentrierungs-Teilsystem (1c) mit dem Trennmittel (6100) assoziiert ist.

11. Greifvorrichtung (5000), die dazu eingerichtet ist, geformte Teile aus einer Spritzgussform (4000) nach Anspruch 9 zu entnehmen und/oder gegriffene geformte Teile zu einer Trennvorrichtung (6000) nach Anspruch 10 zu überführen, wobei die Greifvorrichtung ferner dazu eingerichtet sein kann, Einsätze aus einer Trennvorrichtung (6000) nach Anspruch 10 zu einer Spritzgussform (4000) nach Anspruch 9 zu überführen, wobei die Greifvorrichtung (5000) ein Greifmittel (5100) und mindestens ein Zentrierungs-Teilsystem (1a) nach einem der Ansprüche 1 bis 7 umfasst, wobei das Zentrierungs-Teilsystem (1a) mit dem Greifmittel (5100) assoziiert ist, und wobei das Zentrierungs-Teilsystem (1a) dazu eingerichtet ist, mit dem Zentrierungs-Teilsystem (1b) der Spritzgussform (4000) und/oder dem Zentrierungs-Teilsystem (1c) der Trennvorrichtung (6000) in Eingriff zu gelangen.

12. Spritzgussformsystem (7000), umfassend
eine Spritzgussform (4000) nach Anspruch 9,
eine Greifvorrichtung (5000) nach Anspruch 11, und
optional mindestens eine Trennvorrichtung (6000) nach Anspruch 10.

13. Verfahren (8000) zum Zentrieren von zwei Teilen relativ zueinander, wobei das Verfahren umfasst
Bereitstellen (8100) eines ersten Teils, wobei das erste Teil einem ersten Zentrierungs-Teilsystem (1a) nach einem der Ansprüche 1 bis 7 zugeordnet ist;
Bereitstellen (8200) eines zweiten Teils, wobei das zweite Teil einem zweiten Zentrierungs-Teilsystem (1b, 1c) zugeordnet ist, wobei das zweite Zentrierungs-Teilsystem (1b, 1c) ein entsprechendes Zentrierungs-Teilsystem (1b, 1c) für das erste Zentrierungs-Teilsystem (1a) ist,
Ineingriffbringen (8300) eines ersten Zentrierelements (10a) des ersten Zentrierungs-Teilsystems (1a) mit einem ersten entsprechenden Zentrierelement (10b, 10c) des zweiten Zentrierungs-Teilsystems (1b, 1c), und
Ineingriffbringen (8310) eines zweiten Zentrierelements (20a) des ersten Zentrierungs-Teilsystems (1a) mit einem zweiten entsprechenden Zentrierelement (20b) des zweiten Zentrierungs-Teilsystems (1b, 1c), wodurch
Zentrieren (8400) des ersten Teils in Bezug auf den zweiten Teil.

14. Verfahren (8000) nach Anspruch 13, wobei der erste Teil ein Greifmittel (5100) einer Greifvorrichtung (5000) nach Anspruch 11 ist und wobei der zweite Teil ein Formhohlraum (4150) einer Spritzgussform (4000) nach Anspruch 9 ist oder wobei der zweite Teil ein Trennmittel (6100) einer Trennvorrichtung (6000) nach Anspruch 10 ist.

## Revendications

1. Un sous-système de centrage (1a) comprenant un premier élément de centrage (10a), un second élément de centrage (20b) et une plaque d'assise (50), dans lequel
le premier élément de centrage (10a) définit un premier axe de guidage (100a) et
est apte à s'emboîter avec un premier élément de centrage correspondant (10b, 10c) d'un sous-système de centrage correspondant (1b, 1c) suivant une direction d'emboîtement (A), le premier élément de centrage (10a) étant configuré pour permettre un mouvement relatif entre le premier élément de centrage (10a) et le premier élément de centrage correspondant (10b, 10c) suivant le premier axe de guidage (100a) pendant l'emboîtement ; dans lequel
le second élément de centrage (20a) définit un second axe de guidage (200a) et
est apte à s'emboîter avec un second élément de centrage correspondant (20b) du sous-système de centrage correspondant (1b, 1c), le second élément de centrage (20a) étant configuré pour permettre un mouvement relatif entre le second élément de centrage (20a) et le second élément de centrage correspondant (20b, 20c) suivant le second axe de guidage (200a) pendant l'emboîtement ; et dans lequel
le premier axe de guidage (100a) et le second axe de guidage (200a) sont non parallèles, et chacun du premier axe de guidage (100a) et du second axe de guidage (200a) est différent de la direction d'emboîtement (A) ;
dans lequel la plaque d'assise (50) comprend au moins un réceptacle (51) qui retient un élément de centrage (10a, 12a, 20a, 22a), et dans lequel le réceptacle (51) est configuré pour découpler thermiquement l'élément de centrage (10a, 12a, 20a, 22a) de la plaque d'assise (50).

2. Le sous-système de centrage (1a) de la revendication 1, comprenant en outre
un troisième élément de centrage (12a) définissant un axe de guidage et qui est apte à s'emboîter avec un troisième élément de centrage correspondant (12b, 12c) d'un sous-système de centrage correspondant (1b, 1c), le troisième élément de centrage (12a) étant configuré pour permettre un mouvement relatif entre le troisième élément de centrage (12a) et le troisième élément de centrage correspondant (12b, 12c) suivant l'axe de guidage du troisième élément de centrage (12a), et dans lequel
le troisième élément de centrage (12a) est agencé par rapport au premier élément de centrage (10a) de manière que l'axe de guidage du troisième élément de centrage (12a) soit aligné avec le premier axe de guidage (100a).

3. Le sous-système de centrage (1a) de la revendication 1 ou 2, comprenant en outre
un quatrième élément de centrage (22a) définissant un axe de guidage et qui est apte à s'emboîter avec un quatrième élément de centrage correspondant (22b, 22c) d'un sous-système de centrage correspondant (1b, 1c), le quatrième élément de centrage (22a) étant configuré pour permettre un mouvement relatif entre le quatrième élément de centrage (22a) et le quatrième élément de centrage correspondant (22b, 22c) suivant l'axe de guidage du quatrième élément de centrage (22a), et dans lequel
le quatrième élément de centrage (22a) est agencé par rapport au second élément de centrage (20a) de manière que l'axe de guidage du quatrième élément de centrage (22a) soit aligné avec le second axe de guidage (100a).

4. Le sous-système de centrage (1a) de l'une des revendications précédentes, dans lequel au moins un élément de centrage (10a, 12a, 20a, 22a) comprend
une première face de guidage (110a), la première face de guidage (110a) étant configurée pour guider un élément de centrage correspondant respectif (10b, 10c, 12b, 12c, 20b, 20c, 22b, 22c) en emboîtement avec l'élément de centrage (10a, 12a, 20a, 22a), de manière à être centré sur l'axe de guidage (100a, 200a) de l'élément de centrage (10a, 12a, 20a, 22a), et éventuellement
une seconde face de guidage (210a), la seconde face de guidage (210a) étant configurée pour guider l'élément de centrage correspondant respectif (10b, 10c, 12b, 12c, 20b, 20c, 22b, 22c) en emboîtement avec l'élément de centrage (10a, 12b, 20a, 22a), de manière à être centré sur l'axe de guidage (100a, 200a) de l'élément de centrage (10a, 12a, 20a, 22a), dans lequel
la première face de guidage (110a) et la seconde face de guidage (210a) peuvent être agencées pour former un angle (α), en particulier un angle aigu (α).

5. Le sous-système de centrage (1a) de l'une des revendications précédentes, dans lequel au moins un élément de centrage (10a, 12a, 20a, 22a) comprend un évidement (30), l'évidement (30) étant configuré pour définir l'axe de guidage (100b) de l'élément de centrage, l'évidement (30) pouvant être formé dans une partie d'extrémité (32) d'un élément saillant (34).

6. Le sous-système de centrage (1a) de l'une des revendications précédentes, dans lequel au moins un élément de centrage (10a, 12a, 20a, 22a) comprend un relief (40), le relief (40) étant configuré pour définir l'axe de guidage (100a) de l'élément de centrage, le relief (40) pouvant être formé sur une partie d'extrémité d'un élément saillant.

7. Le sous-système de centrage (1a) de l'une des revendications précédentes, dans lequel au moins un élément de centrage (10a, 12a, 20a, 22a) est supporté par un moyen élastique (60), de manière à être supporté axialement déplaçable dans une direction d'emboîtement.

8. Un système de centrage, comprenant un premier sous-système de centrage (1a) selon l'une des revendications 1 à 7 et un second sous-système de centrage (1b, 1c), dans lequel le second sous-système de centrage (1b, 1e) est un sous-système de centrage correspondant (1b, 1c) pour le premier sous-système de centrage (1a), dans lequel le premier sous-système de centrage (1a) est apte à être associé à une première pièce et le second sous-système de centrage correspondant (1b, 1c) est apte à être associé à une seconde pièce, et dans lequel la première pièce est centrée par rapport à la seconde pièce lorsque les éléments de centrage du premier sous-système de centrage sont emboîtés avec les éléments de centrage correspondants du second sous-système de centrage (1b, 1c).

9. Un moule d'injection (4000), comprenant un demi-moule d'injection (4100, 4200) comprenant une cavité de moule, (4150) et au moins un sous-système de centrage (1b) selon l'une des revendications 1 à 7, dans lequel le sous-système de centrage (1b) est associé à la cavité de moule (4150).

10. Un dispositif séparateur (6000), comprenant un moyen séparateur (6100) et au moins un sous-système de centrage (1c) selon l'une des revendications 1 à 7, dans lequel le moyen séparateur (6100) est configuré pour faire en sorte de surmouler des inserts séparés et/ou pour séparer d'une carotte des pièces moulées par injection, et dans lequel le sous-système de centrage (1c) est associé au moyen séparateur (6100).

11. Un dispositif de saisie (5000), apte à retirer des pièces moulées d'un moule d'injection (4000) selon la revendication 9 et/ou à transférer des pièces moulées saisies vers un dispositif séparateur (6000) selon la revendication 10, les moyens de saisie pouvant en outre être aptes à transférer des inserts depuis un dispositif séparateur (6000) selon la revendication 10 vers un moule d'injection (4000) selon la revendication 9, le dispositif de saisie (5000) comprenant un moyen de saisie (5100) et au moins un sous-système de centrage (1a) selon l'une des revendications 1 à 7, dans lequel le sous-système de centrage (1a) est associé aux moyens de saisie (5100), et dans lequel le sous-système de centrage (1a) est apte à s'emboîter avec le sous-système de centrage (1b) du moule d'injection (4000) et/ou du sous-système de centrage (1c) du dispositif séparateur (6000) .

12. Un système de moulage par injection (7000), comprenant
un moule d'injection (4000) selon la revendication 9,
un dispositif de saisie (5000) selon la revendication 11, et
éventuellement au moins un dispositif séparateur (6000) selon la revendication 10.

13. Un procédé (8000) de centrage de deux pièces l'une par rapport à l'autre, le procédé comprenant :
l'obtention (8100) d'une première pièce, la première pièce étant associée à un premier sous-système de centrage (1a) selon l'une des revendications 1 à 7 ;
l'obtention (8200) d'une seconde pièce, la seconde pièce étant associée à un second sous-système de centrage (1b, 1c), le second sous-système de centrage (1b, 1c) étant un sous-système de centrage correspondant (1b, 1c) pour le premier sous-système de centrage (1a),
l'emboîtement (8300) d'un premier élément de centrage du premier sous-système de centrage (1a) avec un premier élément de centrage correspondant (10b, 10c) du second sous-système de centrage (1b, 1c), et
l'emboîtement (8310) d'un second élément de centrage (20a) du premier sous-système de centrage (1a) avec un second élément de centrage correspondant (20b) du second sous-système de centrage (1b, 1c), de façon à permettre le centrage (8400) de la première pièce par rapport à la seconde pièce.

14. Le procédé (8000) de la revendication 13, dans lequel la première pièce est le moyen de saisie (5100) d'un dispositif de saisie (5000) selon la revendication 11, et dans lequel la seconde pièce est une cavité de moule (4150) d'un moule d'injection (4000) selon la revendication 9, ou dans lequel la seconde pièce est un moyen séparateur (6100) d'un dispositif séparateur (6000) selon la revendication 10.
